# EUROPEAN PATENT APPLICATION

(11) **EP 3 944 116 A1**
(43) Date of publication of application: **26.01.2022**
(21) Application number: 20187036.7
(22) Date of filing: 21.07.2020
(51) Int. Cl.: G06F 21/85, G06F 21/64, G06F 21/74, H04L 9/32, B60W 50/00, G05B 19/00

(54) **METHOD TO FORWARD AUTOMOTIVE SAFETY INTEGRITY LEVEL (ASIL) RELEVANT INFORMATION IN A VEHICLE BUS SYSTEM (VBS) OF A VEHICLE FROM A DATA SOURCE TO A DATA SINK AND VBS FOR FORWARDING ASIL RELEVANT INFORMATION IN A VEHICLE FROM A DATA SOURCE TO A DATA SINK**

(71) Applicant: Valeo Comfort and Driving Assistance, 94046 Créteil Cedex (FR)
(72) Inventor: GROEBEL, Vincent, 94046 Créteil Cedex (FR); WELLENS, Matthias, 94046 Créteil Cedex (FR)
(74) Representative: Delaval, Guillaume Laurent

(57) **Abstract**

The invention relates to a method to forward Automotive Safety Integrity Level (ASIL) relevant information in a Vehicle Bus System (VBS) of a vehicle (V) from a data source (DS) to a data sink (DSI) and to a VBS for a vehicle (V) for forwarding ASIL relevant information from a data source (DS) to a data sink (DSI).

## Description

### FIELD OF THE INVENTION

The present disclosure relates to a method to forward ASIL relevant information in a VBS of a vehicle from a data source to a data sink and to a VBS for a vehicle for forwarding ASIL relevant information from a data source to a data sink.

### BACKGROUND OF THE INVENTION

ASIL compliant VBSs are cost-intensive components of a vehicle.

### SUMMARY OF THE INVENTION

It is an object of the invention to propose a method to forward ASIL relevant information in a VBS of a vehicle from a data source and to a data sink which allows to produce a VBS with reduced cost. It is a further object of the invention to propose a VBS for forwarding ASIL relevant information in a vehicle from a data source and to a data sink which can be produced with reduced cost.

The invention provides a method to forward ASIL relevant information in a VBS of a vehicle from a data source (DS) to a data sink (DSI),
- wherein the VBS comprises the data source (DS), an application processor (AP), a vehicle network (VN) and the data sink (DSI),
- wherein the application processor (AP) comprises a trusted execution environment (TEE) and an untrusted execution environment (UEE);
- wherein the data source (DS) uses a data source key (DSK) to sign application data (AD) or to sign cyclic keep alive packets (KAP) and adds an error-detecting code (EDC) e.g. a cyclic redundancy check to generate a signed data packet (SDP),
- wherein the data source (DS) forwards the signed data packet (SDP) to the untrusted execution environment (UEE) of the application processor (AP);
- wherein the untrusted execution environment (UEE) requests a signature verification of the signed data packet (SDP) from the trusted execution environment (TEE),
- wherein the trusted execution environment (TEE) verifies the signature of the signed data packet (SDP) and prepares a signed message (SM) for the vehicle network (VN) by signing the signed data packet (SDP) with the TCU key (TCUK) and sends the signed message (SM) back to the untrusted execution environment (UEE),
- wherein the untrusted execution environment (UEE) sends the signed message (SM) to the vehicle network (VN),
- wherein the signed message (SM) is forwarded within the vehicle network (VN) and is sent to the data sink (DSI),
- wherein the TCU signature of the signed message (SM) is verified by the data sink (DSI) and the signed message (SM) is processed by the data sink (DSI).

This method makes it possible to provide a performance capability of an ASIL compliant VBS by using an application processor which is not designed as a safety capable system component. Therefore the inventive method allows to use cheaper components as application processor and as vehicle network. Additionally the inventive method allows it to design the VBS on the basis of ASIL compliant data sources which are cheaply available on the market. The advantage of this method is that only a part of the components of the VBS have to be designed as ASIL compliant components. According to the invention an "ASIL island" is established within the system of the VBS, wherein the safety relevant data are generated on this "ASIL island" which is designed as data source. The way down from the data source to the data sink is a passive signal path which can be compared with a cable. The correct/preemptive and unmanipulated transmission of the data is ensured:
- by an ASIL compliant message authentication in the data source,
- by the creation of an additional message which is authenticated with a TCU key which is done in a non ASIL compliant environment and which enables the data sink to verify the message using a common key,
- by cyclic keep alive packets, which means that a heartbeat is added in order to enable to quickly detect a missing transmission.

On the market several cost effective ASIL compliant data sources are available. By the inventive method it is possible to design a VBS which is ASIL compliant as a whole using such cost effective data sources.

It is further provided that a network failure is detected by the data sink (DSI) by detecting a lack of periodic incoming signed messages (SM) and countermeasures against a loss of safe state are triggered. By such operation of the VBS the VBS is capable of detecting network failures and failures of the application processor and is capable of triggering countermeasures to troubleshoot these failures.

It is further provided that in the case that the content of the signed message (SM) is altered by malicious software that intruded into the untrusted execution environment (UEE) or the vehicle network (VN) the signature verification which is done by the data sink (DSI) fails due to an altered content of the signed message (SM) and countermeasures against a loss of safe state are triggered. By such operation of the VBS the VBS is capable of detecting a system intrusion and determining a loss of safe state and capable of triggering countermeasures to troubleshoot the system intrusion.

It is further provided that in the case that a data source failure is detected by the data source (DS) - using, e.g., internal functionality or input from external monitoring hardware - an error message is proactively prepared before a next cyclic keep alive message is due, the error message is forwarded from the data source (DS) to the data sink (DSI), wherein the data sink (DSI) receives the error message and countermeasures against a loss of safe state are triggered. By such operation of the VBS the VBS is capable of detecting a hardware failure of the data source and determining a loss of safe state and is capable of triggering countermeasures to troubleshoot the hardware failure.

It is also provided that the data source (DS) comprises a microcontroller (MC) and the data source key (DSK) is implemented into the microcontroller (MC) during production of the data source (DS). Such a procedure reduces the possibilities for manipulation.

It is further provided to operate the VBS in such a way
- that the trusted execution environment (TEE) of the application processor (AP) comprises a key storage device (KSD),
- wherein the TCU key (TCUK) is stored in the key storage device (KSD) and
- wherein the TCU key (TCUK) is provided by a key management system (KMS) of a manufacturer of the vehicle to the application processor (AP).

By this a not safety capable application processor can be used without reducing the safety capability of the VBS.

It is also provided that the application processor (AP) is run with an operating system of the ASIL QM safety level, by which safety relevant data are allowed to pass through and data integrity is ensured. By running the application processor on the ASIL QM safety level e.g. under LINUX it is possible to avoid the use of expensive hardware components.

The invention provides also a VBS for a vehicle for forwarding ASIL relevant information from a data source (DS) and to a data sink (DSI),
- wherein the VBS comprises the data source (DS), an application processor (AP), a vehicle network (VN) and the data sink (DSI),
- wherein the application processor (AP) comprises a trusted execution environment (TEE) and an untrusted execution environment (UEE),
- wherein the trusted execution environment (TEE) of the application processor (AP) comprises a key storage device (KSD),
- wherein a data source key (DSK) is stored in the data source (DS),
- wherein a TCU key (TCUK) is stored in the key storage device (KSD).

A VBS with a data source key and a TCU key which are stored in such a way in the data source and in the application processor allows the application processor to verify a signed data packet and to generate a signed message out of the signed data packet.

It is further provided that the data source (DS) is safety capable, that the application processor (AP) is not safety capable, that the vehicle network (VN) is not safety capable and that the data sink (DSI) is safety capable. Such a VBS is ASIL compliant as a whole respectively safety capable as a whole even though an application processor is used which is not designed as a safety capable system component. Therefore the VBS can be built with a cheaper application processor. Additionally the invention allows it to design the VBS on the basis of ASIL compliant data sources which are cheaply available on the market. The advantage of such a VBS is that only a part of the components of the VBS have to be designed as ASIL compliant components. The inventive VBS makes it possible to design a VBS which is ASIL compliant as a whole using cost effective data sources.

According to the invention a VBS is a vehicle bus system.

According to the invention a TCU is a Telematics Control Unit. The TCU comprises a data source and an application processor, wherein it is possible that both components are structurally united or structurally separated.

According to the invention ASIL is an abbreviation for Automotive Safety Integrity Level. ASIL is a risk classification scheme defined by the ISO 26262 - Functional Safety for Road Vehicles standard. "ASIL compliant" and "safety capable" are used as synonymous terms, wherein both terms mean a standard which is higher than "ASIL QM". According to the invention the hazard level "ASIL QM" is used as synonymous term to "not safety capable".

According to the invention signed data packets (SDP) as well as signed messages (SM) comprise ASIL relevant information.

### BRIEF DESCRIPTION OF THE DRAWINGS

The foregoing and other features and advantages of the present invention will become apparent to those skilled in the art to which the present invention relates upon reading the following description with reference to the accompanying drawing, in which:

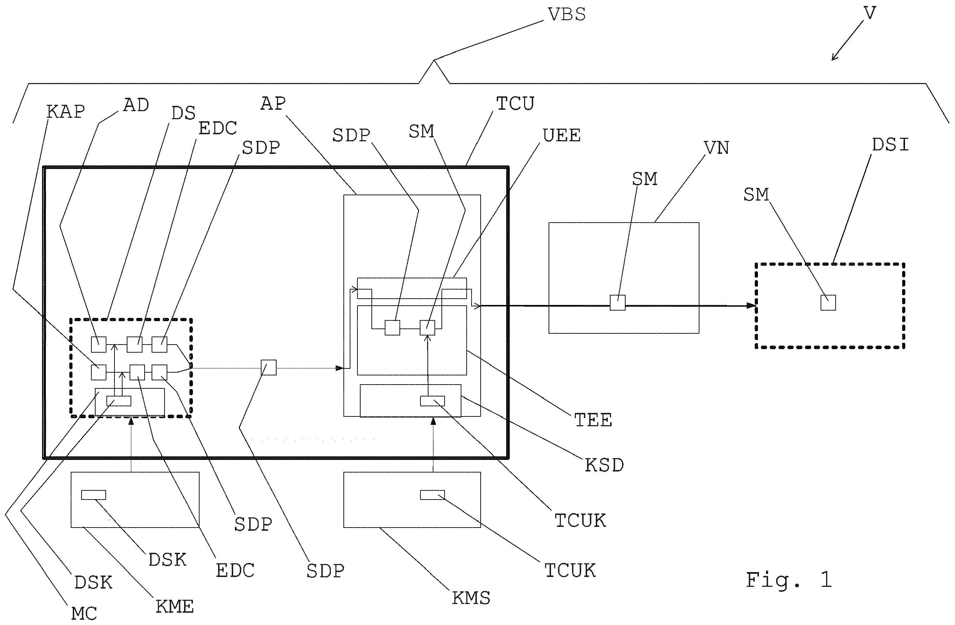

Figure 1 shows a VBS of a vehicle in a schematic view.

Figure 1 shows an electronic control unit VBS of a vehicle V in a schematic view. The VBS comprises a data source DS, an application processor AP, a vehicle network VN and a data sink DSI. The application processor AP comprises a trusted execution environment TEE and an untrusted execution environment UEE.

The VBS allows to forward ASIL relevant information from the data source DS to a data sink DSI.

The data source DS comprises a data source key DSK and uses the data source key DSK to sign application data AD or to sign cyclic keep alive packets KAP and adds an error-detecting code EDC to the application data AD or to the cyclic keep alive packets KAP to generate a signed data packet SDP. Figure 1 shows both ways of generating a signed data packet SDP.

A telematics control unit TCU comprises the application processor AP and the data sink DS. The trusted execution environment TEE of the application processor AP comprises a key storage device KSD. The data source key DSK is stored in the data source DS. A TCU key TCUK is stored in the key storage device KSD.

The data source DS forwards the signed data packet SDP to the untrusted execution environment UEE of the application processor AP.

The untrusted execution environment UEE requests a signature verification of the signed data packet SDP from the trusted execution environment TEE.

The trusted execution environment TEE verifies the signature of the signed data packet SDP and prepares a signed message SM for the vehicle network VN by signing the signed data packet SDP with the TCU key TCUK and sends the signed message SM back to the untrusted execution environment UEE.

The untrusted execution environment UEE sends the signed message SM to the vehicle network VN.

The signed message SM is forwarded within the vehicle network VN and is sent to the data sink DSI.

The TCU signature of the signed message SM is verified by the data sink DSI and the signed message SM is processed by the data sink DSI.

The data source DS is safety capable, the application processor AP is not safety capable, the vehicle network VN is not safety capable and the data sink DSI is safety capable.

A network failure is detected by the data sink DSI by detecting a lack of periodic incoming signed messages SM. In this case the data sink DSI triggers countermeasures against a loss of safe state.

A system intrusion is detected by the data sink DSI in the case that the content of the signed message SM is altered by malicious software that intruded into the untrusted execution environment UEE or the vehicle network VN, wherein the signature verification which is done by the data sink DSI is due to an altered content of the signed message SM and countermeasures against a loss of safe state are triggered.

A hardware failure of the data source DS is detected by the data sink DSI. In order to initiate the hardware failure detection an error message is proactively prepared by the data source DS before a next cyclic keep alive message is due. This timing reduces latency of error reporting. The error message is forwarded from the data source DS to the data sink DSI, wherein the data sink DSI receives the error message and countermeasures against a loss of safe state are triggered.

The data source DS comprises a microcontroller MC and the data source key DSK is implemented into the microcontroller MC during production of the data source DS by key management entity KME of a manufacturer of the data source DS.

The TCU key TCUK is stored in the key storage device KSD, wherein the TCU key TCUK is provided by a key management system KMS of a manufacturer of the vehicle to the key storage device KSD of application processor AP.

### REFERENCE NUMERALS:

- AD: application data
- AP: application processor
- DS: data source
- DSI: data sink
- DSK: data source key
- EDC: error-detecting code
- KAP: keep alive packets
- KME: key management entity
- KMS: key management system
- KSD: key storage device
- MC: microcontroller
- SDP: signed data packet
- SM: signed message
- TEE: trusted execution environment
- TCU: telematics control unit
- TCUK: TCU key
- UEE: untrusted execution environment
- V: vehicle
- VBS: vehicle bus system
- VN: vehicle network

## Claims

1. Method to forward ASIL relevant information in a VBS of a vehicle from a data source (DS) to a data sink (DSI),
- wherein the VBS comprises the data source (DS), an application processor (AP), a vehicle network (VN) and the data sink (DSI),
- wherein the application processor (AP) comprises a trusted execution environment (TEE) and an untrusted execution environment (UEE);
- wherein the data source (DS) uses a data source key (DSK) to sign application data (AD) or to sign cyclic keep alive packets (KAP) and adds an error-detecting code (EDC) to generate a signed data packet (SDP),
- wherein the data source (DS) forwards the signed data packet (SDP) to the untrusted execution environment (UEE) of the application processor (AP);
- wherein the untrusted execution environment (UEE) requests a signature verification of the signed data packet (SDP) from the trusted execution environment (TEE),
- wherein the trusted execution environment (TEE) verifies the signature of the signed data packet (SDP) and prepares a signed message (SM) for the vehicle network (VN) by signing the signed data packet (SDP) with the TCU key (TCUK) and sends the signed message (SM) back to the untrusted execution environment (UEE),
- wherein the untrusted execution environment (UEE) sends the signed message (SM) to the vehicle network (VN),
- wherein the signed message (SM) is forwarded within the vehicle network (VN) and is sent to the data sink (DSI),
- wherein the TCU signature of the signed message (SM) is verified by the data sink (DSI) and the signed message (SM) is processed by the data sink (DSI).

2. Method according to claim 1 **characterized in that** a network failure is detected by the data sink (DSI) by detecting a lack of periodic incoming signed messages (SM) and countermeasures against a loss of safe state are triggered.

3. Method according to claim 1 **characterized in that** in the case that the content of the signed message (SM) is altered by malicious software that intruded into the untrusted execution environment (UEE) or the vehicle network (VN) the signature verification which is done by the data sink (DSI) fails due to an altered content of the signed message (SM) and countermeasures against a loss of safe state are triggered.

4. Method according to claim 1 **characterized in that** in the case that a data source failure is detected by the data source (DS) an error message is proactively prepared before a next cyclic keep alive message is due, the error message is forwarded from the data source (DS) to the data sink (DSI), wherein the data sink (DSI) receives the error message and countermeasures against a loss of safe state are triggered.

5. Method according to at least one of the preceding claims **characterized in that** the data source (DS) comprises a microcontroller (MC) and the data source key (DSK) is implemented into the microcontroller (MC) during production of the data source (DS).

6. Method according to at least one of the preceding claims **characterized in**
- that the trusted execution environment (TEE) of the application processor (AP) comprises a key storage device (KSD),
- - wherein the TCU key (TCUK) is stored in the key storage device (KSD) and
- wherein the TCU key (TCUK) is provided by a key management system (KMS) of a manufacturer of the vehicle to the application processor (AP).

7. Method according to at least one of the preceding claims **characterized in that** the application processor is run with an operating system of the ASIL QM safety level, by which safety relevant data are allowed to pass through and data integrity is ensured.

8. ECU for a vehicle for forwarding ASIL relevant information from a data source (DS) and to a data sink (DSI),
- wherein the VBS comprises the data source (DS), an application processor (AP), a vehicle network (VN) and the data sink (DSI),
- wherein the application processor (AP) comprises a trusted execution environment (TEE) and an untrusted execution environment (UEE),
- wherein the trusted execution environment (TEE) of the application processor (AP) comprises a key storage device (KSD),
- wherein a data source key (DSK) is stored in the data source (DS),
- wherein a TCU key (TCUK) is stored in the key storage device (KSD).

9. ECU according to claim 8 **characterized in that** the data source (DS) is safety capable, that the application processor (AP) is not safety capable, that the vehicle network (VN) is not safety capable and that the data sink (DSI) is safety capable.
